(19) Europäisches Patentamt

European Patent Office

Office européen des brevets

(11) **EP 0 719 307 B1**

(12) **EUROPÄISCHE PATENTSCHRIFT**

(45) Veröffentlichungstag und Bekanntmachung des Hinweises auf die Patenterteilung:
**28.10.1998 Patentblatt 1998/44**

(21) Anmeldenummer: **94924244.0**

(22) Anmeldetag: **07.07.1994**

(51) Int Cl.[6]: **C09D 175/04**
// C08G18/80

(86) Internationale Anmeldenummer:
**PCT/EP94/02236**

(87) Internationale Veröffentlichungsnummer:
**WO 95/03367 (02.02.1995 Gazette 1995/06)**

(54) **NICHTWÄSSRIGE LACKE**

NON-AQUEOUS PAINTS

PEINTURES NON AQUEUSES

(84) Benannte Vertragsstaaten:
**AT BE CH DE DK ES FR GB GR IE IT LI NL PT SE**

(30) Priorität: **24.07.1993 DE 4324947**

(43) Veröffentlichungstag der Anmeldung:
**03.07.1996 Patentblatt 1996/27**

(73) Patentinhaber: **BASF Coatings Aktiengesellschaft
48165 Münster (DE)**

(72) Erfinder:
• **MAYENFELS, Peter
D-48163 Münster (DE)**
• **WIGGER, Georg
D-48151 Münster (DE)**
• **BARTOL, Fritz
D-59071 Hamm (DE)**
• **RÖCKRATH, Ulrike
D-45770 Marl (DE)**
• **POTH, Ulrich
D-48163 Münster (DE)**

(56) Entgegenhaltungen:
**WO-A-90/15090        DE-B- 2 639 491
US-A- 4 677 180**

**Beschreibung**

Die Erfindung betrifft nichtwäßrige Lacke, enthaltend

(A) ein hydroxylgruppenhaltiges Kunstharz oder eine Mischung aus hydroxylgruppenhaltigen Kunstharzen

(B) ein Aminoplastharz oder eine Mischung aus Aminoplastharzen

(C) ein blockiertes Polyisocyanat oder eine Mischung aus blockierten Polyisocyanaten und

(D) ein Pigment oder eine Mischung aus Pigmenten,

wobei die Komponente (A) in einer Menge von 50 bis 90 Gew.-%, die Komponente (B) in einer Menge von 5 bis 45 Gew.-, die Komponente (C) in einer Menge von 5 bis 45 Gew.-% und die Komponente (D) in einer Menge von 1 bis 25 Gew.-% vorhanden ist, wobei die Gewichtsprozentangaben auf (A) + (B) + (C) + (D) = 100 Gew.-% bezogen sind und daß die Komponente (C) sowohl mit einem Blockierungsmittel (I) als auch mit einem Blockierungsmittel (II) als auch mit einem Blockierungsmittel (II) blockierte Isocyanatgruppen enthält, wobei

- das Blockierungsmiitel (I) ein Dialkylmalonat oder eine Mischung aus Dialkylmalonaten ist,
- das Blockierungsmittel (II) ein von (I) verschiedenes, aktive Methylengruppen enthaltendes Blockierungsmittel, ein Oxim oder eine Mischung aus diesen Blockierungsmitteln ist und
- das Äquivalentverhältnis zwischen den mit (I) blokkierten loscyanatgruppen und den mit (II) blockierten Isocyanatgruppen zwischen 1,0:1,0 und 9,0:1,0 liegt.

In der JP-A-2-242867 werden nichtwäßrige Lacke beschrieben, die (A) ein hydroxylgruppenhaltiges Kunstharz, (B) ein Aminoplastharz, (C) ein blockiertes Polyisocyanat und (D) Pigmente enthalten, wobei die Komponenten (B) und (C) so auszuwählen sind, daß die Temperatur, bei der eine chemische Reaktion zwischen (A) und (C) einsetzt, höchstens 20°C unter und höchstens 50°C über der Temperatur, bei der eine chemische Reaktion zwischen (A) und (B) einsetzt, liegen soll.

Die in der JP-A-2-242867 beschriebenen nichtwäßrigen Lacke liefern Lackierungen, die insbesondere hinsichtlich ihrer Beständigkeit gegenüber organischen Lösemitteln und Säuren, ihrer Kratzfestigkeit und ihrer Vergilbungsneigung verbesserungsbedürftig sind.

In der DE-B-26 39 491 werden nicht-wäßrige Lacke beschrieben, die ein hydroxylgruppenhaltiges Polyester- und/oder Alkydharz, mit einem Acetessigsäueralkylester blockiertes Hexamethylendiisocyanat und/ oder mit einem Acetessigsäurealkylester blockiertes 2,2,4 Trimethylhexamethylendiisocyanat und ein Aminoplastharz enthalten. Mit diesen Lacken werden Lackierungen erhalten, die insbesondere bei Anwendung von erhöhten Einbrenntemperaturen und/oder verlängerten Einbrennzeiten vergilben und die insbesondere hinsichtlich ihrer Beständigkeit gegenüber Säuren und organischen Lösemitteln sowie hinsichtlich ihrer Kratzbeständigkeit verbessert werden sollten.

Die mit den erfindungsgemäßen Lacken herstellbaren Lackierungen zeichnen sich durch hohe Härte, hohen Glanz, gute Haftung, guten Decklackstand, gute Kratzbeständigkeit und gute Beständigkeit gegen klimatische Einflüsse, organische Lösemittel und Säuren sowie hohe Resistenz gegenüber Vergilbung (insbesondere gegen Vergilbung, die infolge von hohen Einbrenntemperaturen und/oder infolge von langen Einbrennzeiten auftritt) aus. Die erfindungsgemäßen nichtwäßrigen Lacke zeichnen sich außerdem durch hohe Lagerstabilität aus und können auch mit einem niedrigen Gehalt (z.B. kleiner als 50 Gew.-%) an organischen Lösemitteln gut verarbeitet werden.

Als Komponente (A) kann im Prinzip jedes für transparente Decklacke geeignete hydroxylgruppenhaltige Kunstharz oder eine Mischung aus solchen Kunstharzen eingesetzt werden. Als Komponente (A) werden vorzugsweise hydroxylgruppenhaltige Polyesterharze und/oder hydroxylgruppenhaltige Alkydharze und/oder hydroxylgruppenhaltige Polyacrylatharze sowie Mischungen aus diesen Harzen eingesetzt. Die als Komponente (A) eingesetzten Kunstharze weisen im allgemeinen Hydroxylzahlen von 40 bis 240, vorzugsweise 60 bis 150 und zahlenmittlere Molekulargewichte von 1500 bis 30000, vorzugsweise 2000 bis 15000, besonders bevorzugt 2500 bis 7500 auf.

Hydroxylgruppenhaltige Polyesterharze, Alkydharze und Polyacrylatharze sind gut bekannt. Beispiele für solche Harze und deren Herstellung werden beispielsweise in der JP-A-2-24 28 67, DE-B-26 39 491 sowie in den auf Seite 6 in den Zeilen 31 bis 36 genannten Patentdokumenten beschrieben.

Als Komponente (A) werden besonders bevorzugt Polyacrylatharze eingesetzt, die herstellbar sind, indem

(a) 10 bis 92, vorzugsweise 20 bis 60 Gew.-% eines Alkyl- oder Cycloalkylacrylates oder eines Alkyloder Cycloalkylmethacrylates mit 1 bis 18, vorzugsweise 4 bis 13 Kohlenstoffatomen im Alkyl- bzw. Cycloalkylrest oder Mischungen aus solchen Monomeren

(b) 8 bis 60, vorzugsweise 12,5 bis 38,5 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren

(c) 0,0 bis 5,0, vorzugsweise 0,7 bis 3,0 Gew.-% Acrylsäure oder Methacrylsäure oder Mischungen aus diesen Monomeren und

(d) 0 bis 50, vorzugsweise 0 bis 30 Gew.-% von (a), (b) und (c) verschiedene, mit (a), (b) und (c) copolymerisierbare ethylenisch ungesättigte Monomere oder Mischungen aus solchen Monomeren

zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70°C, bevorzugt von -20 bis +40°C und zahlenmittleren Molekulargewichten von 1500 bis 30000, vorzugsweise von 2000 bis 15000, (gelpermeationschromatographisch mit Polystyrolstandard bestimmt) polymerisiert werden.

Als Beispiele für (a)-Komponenten werden genannt: Methyl-, Ethyl-, Propyl-, n-Butyl-, Isobutyl-, tert.-Butyl-, Pentyl-, Hexyl-, Heptyl- und 2-Ethylhexylacrylat bzw. -methacrylat sowie Cyclohexylacrylat und Cyclohexylmethacrylat.

Als Beispiele für (b)-Komponenten werden genannt: Hydroxyethyl-, Hydroxypropyl- und Hydroxybutylacrylat bzw. -methacrylat.

Als Beispiele für (d)-Komponenten werden genannt: Vinylaromaten, wie beispielsweise Styrol, Vinyltoluol, $\alpha$-Methylstyrol, $\alpha$-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure.

Die Hydroxylzahl und die Säurezahl der Polyacrylatharze kann der Fachmann problemlos durch die Menge an eingesetzter Komponente (b) bzw. (c) steuern.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_G} = \sum_{n=1}^{n=x} \frac{W_n}{T_{Gn}}$$

$T_G$ = Glasübergangstemperatur des Polyacrylatharzes

x = Anzahl der im Polyacrylatharz einpolymerisierten verschiedenen Monomeren.

$W_n$ = Gewichtsanteil des n-ten Monomers

$T_{Gn}$ = Glasübergangstemperatur des Homopolymers aus dem n-ten Monomer

Maßnahmen zur Steuerung des Molekulargewichtes (z. B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als Komponente (A) werden auch besonders bevorzugt Polyesterharze bzw. Alkydharze eingesetzt, die herstellbar sind, indem

($\alpha$) eine cycloaliphatische oder aliphatische Polycarbonsäure oder eine Mischung aus solchen Polycarbonsäuren

($\beta$) ein aliphatisches oder cycloaliphatisches Polyol mit mehr als zwei Hydroxylgruppen im Molekül oder eine Mischung aus solchen Polyolen

($\gamma$) ein aliphatisches oder cycloaliphatisches Diol oder eine Mischung aus solchen Diolen und

($\delta$) eine aliphatische lineare oder verzweigte gesättigte Monocarbonsäure oder eine Mischung aus solchen Monocarbonsäuren

in einem molaren Verhältnis von ($\alpha$) : ($\beta$) : ($\gamma$) : ($\delta$) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden.

Als Beispiele für die Komponente (a) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure.

Als Beispiele für die Komponente ($\beta$) werden genannt: Pentaerythrit, Trimethylolpropan, Trimethylolethan und Glycerin.

Als Beispiele für die Komponente ($\gamma$) werden genannt: Ethylenglykol, Diethylenglykol, Propylenglykol, Neopentylglykol, 2-Methyl-2-propylpropandiol-1,3, 2-Ethyl-2-butylpropandiol-1,3, 2,2,4-Trimethylpentandiol-1,5, 2,2,5-Trimethylhexandiol-1,6, Hydroxypivalinsäureneopentylglykolester und Dimethylolcyclohexan.

Als Beispiele für die Komponente ($\delta$) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Resines Alkydes-Polyesters von J. Bourry, Paris Verlag Dunod 1952, Alkyd Resins von C.R. Martens, Reinhold Publishing Corporation, New York 1961 und Alkyd Resin Technology von T.C. Patton, Interscience Publishers 1962 beschrieben.

Als Komponente (B) kann im Prinzip jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind.

Als Komponente (B) werden vorzugsweise mit niedrigen Alkoholen, insbesondere mit Methanol oder Butanol veretherte Melamin-Formaldehydharze eingesetzt. Besonders bevorzugt werden mit niedrigen Alkoholen, insbesondere mit Methanol und/oder Butanol veretherte Melamin-Formaldehydharze, die im statistischen Mittel pro Triazinring noch 0,1 bis 0,25 an Stickstoffatome gebundene Wasserstoffatome enthalten, als Komponente (B) eingesetzt.

Die erfindungsgemäßen nichtwäßrigen Lacke enthalten als Komponente (C) ein blockiertes Polyisocyanat oder eine Mischung aus blockierten Polyisocyanaten, wobei die Komponente (C) sowohl mit einem Blockierungsmittel (I) als auch mit einem Blockierungsmittel (II) blockierte Isocyanatgruppen enthält, wobei

- das Blockierungsmittel (I) ein Dialkylmalonat oder eine Mischung aus Dialkylmalonaten ist,

- das Blockierungsmittel (II) ein von (I) verschiedenes, aktive Methylengruppen enthaltendes Blockierungsmittel, ein Oxim oder eine Mischung aus diesen Blockierungsmitteln ist und

- das Äquivalentverhältnis zwischen den mit (I) blockierten Isocyanatgruppen und den mit (II) blockierten Isocyanatgruppen zwichen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Die Komponente (C) wird vorzugsweise wie folgt hergestellt. Ein Polyisocyanat oder eine Mischung aus Polyisocyanaten wird in an sich bekannter Art und Weise mit einer Mischung aus den Blockierungsmitteln (I) und (II) umgesetzt, wobei die Mischung aus den Blockierungsmitteln (I) und (II) die Blockierungsmittel (I) und (II) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (I) und (II) so weit umgesetzt werden, bis keine Isocyanatgruppen mehr nachweisbar sind. In der Praxis kann das den Einsatz von sehr großen überschüssen an Blockierungsmitteln und/oder sehr lange Reaktionszeiten erfordern. Es wurde nun überraschenderweise gefunden, daß auch dann Lacke mit den oben beschriebenen guten Eigenschaften erhalten werden, wenn mindestens 50, vorzugsweise mindestens 70 Prozent der Isocyanatgruppen des Polyisocyanates bzw. des Gemisches aus Polyisocyanaten mit der Mischung aus den Blockierungsmitteln (I) und (II) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1,3, 2,2,4-Trimethylpentandiol-1,5 und 2,2,5-Trimethylhexandiol-1,6 oder die als Komponente (A) einsetzbaren hydroxylgruppenhaltigen Kunstharze eingesetzt.

Die Komponente (C) ist auch erhältlich, indem mit den Blockierungsmitteln (I) bzw. (II) blockierte Polyisocyanate in einem solchen Verhältnis gemischt werden, daß eine Mischung erhalten wird, in der das Äquivalentverhältnis zwischen den mit (I) blockierten Isocyanatgruppen und den mit (II) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Diese Verfahrensweise zur Herstellung der Komponente (C) ist weniger bevorzugt.

Prinzipiell können alle auf dem Lackgebiet einsetzbaren Polyisocyanate zur Herstellung der Komponente (C) eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-Bis-(2-isocyanatopropyl-2-)benzol (TMXDI) sowie Addukte dieser Polyisocyanate an Polyole, insbesondere niedermolekulare Polyole, wie z.B. Trimethylolpropan und von diesen Polyisocyanaten abgeleitete isocyanuratgruppen- und/oder biuretgruppenhaltige Polyisocyanate. Als Polyisocyanate werden besonders bevorzugt Hexamethylendiisocyanat und Isophorondiisocyanat, von diesen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Äquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blockierungsmittel (I) werden Dialkylmalonate oder eine Mischung aus Dialkylmalonaten eingesetzt.

Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylester, wobei Malonsäurediethylester bevorzugt eingesetzt wird.

Als Blockierungsmittel (II) werden von (I) verschiedene, aktive Methylengruppen enthaltende Blockierungsmittel und Oxime sowie Mischungen aus diesen Blockierungsmitteln eingesetzt. Als Beispiele für Blockierungsmittel, die als Blockierungsmittel (II) einsetzbar sind, werden genannt: Acetessigsäuremethyl-, ethyl-, -propyl-, butyl-, -pentyl-, hexyl-, heptyl-, octyl-, nonyl-, -decyl- oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (II) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäureethylester oder Methylethylketoxim als Blockierungsmittel (II) eingesetzt.

Die erfindungsgemäßen Lacke enthalten als Komponente (D) ein Pigment oder eine Mischung aus Pigmenten. Als Komponente (D) können im Prinzip alle zur Herstellung von nichtwäßrigen Lacken geeigneten organischen oder anorganischen Pigmente bzw. Mischungen aus solchen Pigmenten eingesetzt werden. Die erfindungsgemäßen Lacke enthalten vorzugsweise nicht-transparente Pigmente bzw. Mischungen aus nicht-transparenten Pigmenten. Als Beispiele für einsetzbare Pigmente werden genannt: Azopigmente (z. B. Pigment Red 5.7:1, Pigment Yellow 1, Pigment Yellow 13 und Pigment Red 7), Phthalocyaninpigmente (z. B. Pigment Blue 15:3 und Phthalocyaningrün), Carbonylpigmente (z. B. Pigment Red 88, Pigment Red 177, Pigment Yellow 123, Pigment Violett 19, Pigment Yellow 24 und Pigment Orange 51 bzw. 52), Dioxazinpigmente (z. B. Pigment Violet 23), Titandioxid, Farbruß, Eisenoxidschwarz (Magnetit, Trieisentetroxid), Eisenoxidrot (Hämatit, $\alpha$-Dieisentrioxid), Eisenoxidgelb (Eisenoxidhydroxid), Eisenoxidbraun (Mischpigment aus Eisenoxidrot, Eisenoxidgelb und Eisenoxidschwarz), Chromoxidgrün (Dichromtrioxid), Nickeltitangelb, Chromtitangelb und Kobaltblau. Desweiteren können auch Effektpigmente wie z. B. Metallblättchenpigmente, insbesondere Aluminiumblättchenpigmente und Perlglanzpigmente eingesetzt werden.

Die Komponenten (A), (B) (C) und (D) werden in den erfindungsgemäßen nichtwäßrigen Lacken in solchen Mengen eingesetzt, daß die Komponente (A) in einer Menge von 50 bis 90, vorzugsweise 60 bis 75 Gew.-%, die Komponente (B) in einer Menge von 5 bis 45, vorzugsweise 10 bis 25 Gew.-% und die Komponente (C) in einer Menge von 5 bis 45, vorzugsweise 10 bis 25 Gew.-% und die Komponente (D) in einer Menge von 1 bis 25, vorzugsweise 5 bis 15 Gew.-% vorhanden ist, wobei die Gewichtsprozentangaben auf (A) + (B) + (C) + (D) = 100 Gew.-% bezogen sind.

Als organische Lösemittel enthalten die erfindungsgemäßen nichtwäßrigen Lacke übliche zur Herstellung von nichtwäßrigen Lacken gebräuchliche organische Lösemittel. Sie können außerdem noch weitere gebräuchliche Zusätze, wie z. B. Lichtschutzmittel, Verlaufshilfsmittel usw. enthalten.

Die erfindungsgemäßen nichtwäßrigen Lacke können zur Lackierung beliebiger, vorzugsweise metallischer Substrate verwendet werden. Sie werden vorzugsweise zur Herstellung von Decklackierungen, insbesondere zur Herstellung von einschichtigen Decklackierungen auf Automobilkarosserien verwendet. Sie können sowohl zur Herstellung von Erstlackierungen als auch zur Herstellung von Reparaturlackierungen verwendet werden.

Die erfindungsgemäßen nichtwäßrigen Lacke werden üblicherweise für 10 bis 50, vorzugsweise 15 bis 40, besonders bevorzugt 20 bis 30 Minuten bei Temperaturen von 100 bis 200, vorzugsweise 120 bis 180, besonders bevorzugt 120 bis 160°C eingebrannt.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

Herstellung der Komponente (A)

Beispiel 1

Herstellung eines hydroxylgruppenhaltigen Polyacrylatharzes

In einen Reaktor mit einem Nutzvolumen von 4 l, ausgestattet mit einer regelbaren Heizung, einem Blattrührer, einem Thermometer, einem Einleitrohr für einen Stickstoffschutzgasstrom, je einem Dosiergefäß für eine Monomerenmischung und eine Initiatorlösung und einem Rückflußkühler werden 1140 g Polymerisationslösemittel aus einer Fraktion aromatischer Kohlenwasserstoffe mit einem Siedebereich von 158°C bis 172°C bei Normaldruck eingewogen. Das Lösemittel wird auf 150°C aufgeheizt. Dann werden aus dem Dosiergefäß für die Monomerenmischung eine Mischung aus 562 g tert.-Butylacrylat, 182 g n-Butylmethacrylat, 364 g 2-Hydroxypropylmethacrylat, 73 g 4-Hydroxibutylacrylat, 33 g Acrylsäure und aus dem Dosiergefäß für die Initiatorlösung eine Lösung von 73 g tert.-Butylperbenzoat in 73 g des oben beschriebenen aromatischen Lösemittels gleichzeitig zudosiert. Die Monomerenmischung wird über einen Zeitraum von 4 Stunden, die Initiatorlösung über einen Zeitraum von 4,5 Stunden gleichmäßig in den Reaktor dosiert. Die Temperatur der Reaktionsmischung wird dabei auf 150°C gehalten. Nach Beendigung der Iniatorzugabe wird das Reaktionsgut für eine weitere Stunde auf 150°C gehalten, dann wird der Grad des Umsatzes durch mehrfache Bestimmung des nichtflüchtigen Anteils der Reaktionsmischung bestimmt. Sobald der Umsatz vollständig ist, werden bei 110°C 526 g des Polymerisationslösemittels unter Vakuum bei 150 bis 190 hPa abdestilliert. Dann wird mit 101 g 1-Methoxypropylacetat-2 verdünnt und mit dem genannten aromatischen Lösemittel auf einen nichtflüchtigen Anteil von ca. 60 Gew.-% eingestellt. Die resultierende Polymerlösung hat einen nichtflüchtigen Anteil (60 min.; 130°C) von 59,5 %. Das Polymer hat eine Säurezahl von 23,6 und eine OH-Zahl von 139 und eine Lösungsviskosität von 390 mPa·s, gemessen an der beschriebenen Lösung in einem ICI-Platte-Kegel-Viskosimeter bei 23°C.

Beispiel 2

Herstellung eines hydroxylgruppenhaltigen Alkydharzes

In die im Beispiel 1 beschriebene Apparatur, allerdings ohne Dosiergefäße und Rückflußkühler, dafür mit Wasserabscheider und Rückflußkühler ausgestattet, werden 1142 g Hexahydrophthalsäureanhydrid, 1024 g 1,1,1-Trimethylolpropan, 527 g Isononansäure als Isomerengemisch von 3,3,5-Trimethylhexansäure und 3,5,5 Trimethylhexansäure und 100 g Xylol als Schleppmittel eingewogen. Der Wasserabscheider wird mit Xylol gefüllt. Der Inhalt der Apparatur wird innerhalb von 8 Stunden auf 210°C so aufgeheizt, daß ein gleichmäßiger Rückfluß des Schleppmittels entsteht. Das Reaktionsgemisch wird auf 210°C gehalten, bis eine Säurezahl von 18,6 und eine Viskosität von 940 mPa·s, gemessen an einer Probe einer 60 %-igen Lösung des Reaktionsgemisches in dem in Beispiel 1 beschriebenen aromatischen Lösemittel, erreicht ist. Dann wird auf 160°C abgekühlt und der Inhalt der Apparatur wird mit 1000 g des genannten aromatischen Lösemittels unter Rühren gelöst und dann aus der Apparatur abgelassen. Dann wird die Lösung mit so viel des aromatischen Lösemittels verdünnt, daß ein nichtflüchtiger Anteil von 60,5 % (60 min.; 130°C) resultiert. Das auf diese Weise hergestellte Alkydharz hat eine Säurezahl von 17,1, eine OH-Zahl von 123 bezogen auf den nichtflüchtigen Anteil und eine Viskosität von 1200 mPa·s in der beschriebenen Lösung, gemessen in einem ICI-Platte-Kegel-Viskosimeter bei 23°C.

Herstellung der Komponente (C)

Beispiel 3

Blockiertes Polyisocyanat 1

In die im Beispiel 1 beschriebene Apparatur, ausgestattet mit einem Dosiergefäß und einem Rückflußkühler werden 504,0 g eines handelsüblichen Isocyanurattrimeren des Hexamethylendiisocyanats und 257,2 g des in Beispiel 1 beschriebenen aromatischen Lösemittels eingewogen. Die Lösung wird auf 50°C erwärmt. Dann wird aus dem Dosiergefäß eine Mischung aus 348,0 g Diethylmalonat, 104,0 g Acetessigsäureethylester und 2,5 g einer 50 %-igen Lösung von Natrium-p-dodecylphenolat in Xylol in einem Zeitraum von 2 Stunden so in die Lösung dosiert, daß die Temperatur 70°C nicht überschreitet.

Es wird dann langsam auf 90°C erhitzt und diese Temperatur für 6 Stunden gehalten. Dann werden weitere 2,5 g Natrium-p-dodecylphenolatlösung zugegeben und es wird so lange bei 90°C gehalten, bis der Gehalt an NCO-Gruppen im Reaktionsgemisch 0,48 % erreicht hat. Dann werden 35,1 g n-Butanol zugegeben. Die erhaltene Lösung hat einen nichtflüchtigen Anteil von 59,6 % (60 min.; 130°C) und eine Viskosität von 590 mPa·s, gemessen in einem ICI-Platte-Kegel-Viskosimeter bei 23°C.

Beispiel 4

Blockiertes Polyisocyanat 2

Es wird so verfahren wie im Beispiel 3. In die Apparatur werden 722,0 g eines handelsüblichen Isocyanurattrimeren des Hexamethylendiisocyanats und 460,0 g des im Beispiel 1 beschriebenen aromatischen Lösemittels eingewogen. In das Dosiergefäß wird eine Mischung aus 527,0 g Diethylmalonat, 130,4 g Acetessigsäureethylester und 4,5 g einer 50 %-igen Lösung von Natrium-p-dodecylphenolat in Xylol eingewogen und wie beschrieben zudosiert und umgesetzt. Es wird eine Temperatur von 90°C gehalten bis ein Gehalt an NCO-Gruppen im Reaktionsgemisch von 0,92 % erreicht ist. Dann werden 20,3 g 1,4-Dimethylolcyclohexan zugegeben und weiter bei 90°C gehalten bis der Gehalt an NCO-Gruppen im Reaktionsgemisch 0,28 % erreicht hat. Dann wird abgekühlt und 140 g n-Butanol zugegeben. Die erhaltene Lösung hat einen nichtflüchtigen Anteil von 56,8 % (60 min.; 130°C) und eine Viskosität von 405 mPa·s, gemessen in einem ICI-Platte-Kegel-Viskosimeter bei 23°C.

Herstellung von Pigmentpasten

Beispiel 5

Pigmentpaste 1

83,7 Teile der gemäß Beispiel 1 hergestellten Polyacrylatharzlösung werden mit 5 Teilen eines handelsüblichen Rußpigments, 1 Teil Calciumoctoat, 0,3 Teilen Triethylentetramin und 10 Teilen Solvesso® 150 in einem Dissolver intensiv vorgemischt. Die so erhaltene Mischung wird dann in einer Kugelmühle auf eine Pigmenteinheit von < 10 µm gemahlen.

Beispiel 6

Pigmentpaste 2

Es wird wie in Beispiel 5 beschrieben verfahren. An Stelle der Polyacrylatharzlösung wird jedoch die gemäß Beispiel 2 hergestellte Alkydharzlösung eingesetzt.

Herstellung erfindungsgemäßer pigmentierter Decklacke

Beispiel 7

Decklack 1

29,2 Teile der gemäß Beispiel 1 hergestellten Polyacrylatharzlösung, 26,9 Teile der gemäß Beispiel 3 hergestellten Lösung des blockierten Polyisocyanats 1 und 6,6 Teile einer 90 %igen butanolischen Lösung eines handelsüblichen iminogruppenhaltigen, mit Methanol veretherten Melaminharzes (Cymel® 327, Cyanamid) werden mit einem Laborturbinenrührer gut vermischt. Zu der erhaltenen Mischung werden 2,3 Teile n-Butanol, 4,5 Teile Butyldiglycolacetat und 1,5 Teile einer handelsüblichen 5 %igen Lösung eines Verlaufshilfsmittels auf Basis eines Polysiloxans zugegeben und gut eingerührt. Anschließend werden 28 Teile der gemäß Beispiel 5 hergestellten Pigmentpaste 1 zugegeben und mit einem Laborturbinenrührer gut eingerührt. Der so erhaltene Decklack wird mit Xylol so lange verdünnt, bis er eine Viskosität von 23 sec., gemessen im DIN-4-Becher bei 20°C, aufweist.

Beispiel 8

Decklack 2

Es wird wie in Beispiel 7 beschrieben verfahren. An Stelle der Polyacrylatharzlösung wird jedoch die gemäß Beispiel 2 hergestellte Alkydharzlösung, an Stelle der gemäß Beispiel 3 hergestellten Lösung des blockierten Polyisocyanats 1 wird die gemäß Beispiel 4 hergestellte Lösung des blockierten Polyisocyanats 2 und an Stelle der gemäß Beispiel 5 hergestellten Pigmentpaste 1 wird die gemäß Beispiel 6 hergestellte Pigmentpaste 2 eingesetzt.

Applikation der erfindungsgemäßen Decklacke und Prüfung der erhaltenen Lackierungen

Die gemäß Beispiel 7 und Beispiel 8 hergestellen Decklacke 1 und 2 werden auf mit einem handelsüblichen Elektrotauchlack und einem handelsüblichen Füller lackierte Stahlbleche so gespritzt, daß Lackfilme mit einer Trockenfilmdicke von 40 bis 45 µm erhalten werden. Die applizierten Naßfilme werden nach einer Vortrockenzeit von 5 Minuten bei Raumtemperatur 20 Minuten lang bei 140°C im Umluftofen eingebrannt. Es werden Lackierungen erhalten, die sich durch hohe Härte, hohen Glanz, gute Haftung, guten Decklackstand, gute Kratzbeständigkeit, gute Säurebeständigkeit und gute Wetterbeständigkeit auszeichnen.

**Patentansprüche**

1. Nichtwäßrige Lacke, enthaltend

   (A) ein hydroxylgruppenhaltiges Kunstharz oder eine Mischung aus hydroxylgruppenhaltigen Kunstharzen

   (B) ein Aminoplastharz oder eine Mischung aus Aminoplastharzen

   (C) ein blockiertes Polyisocyanat oder eine Mischung aus blockierten Polyisocyanaten und

   (D) ein Pigment oder eine Mischung aus Pigmenten,

   dadurch gekennzeichnet, daß
   die Komponente (A) in einer Menge von 50 bis 90 Gew.%, die Komponente (B) in einer Menge von 5 bis 45 Gew.-%, die Komponente (C) in einer Menge von 5 bis 45 Gew.-% und die Komponente (D) in einer Menge von 1 bis 25 Gew.-% vorhanden ist, wobei die Gewichtsprozentangaben auf (A) + (B) + (C) + (D) = 100 Gew.-% bezogen sind und daß die Komponente (C) sowohl mit einem Blockierungsmittel (I) als auch mit einem Blockierungsmittel (II) blockierte Isocyanatgruppen enthält, wobei

   - das Blockierungsmittel (I) ein Dialkylmalonat oder eine Mischung aus Dialkylmalonaten ist,

   - das Blockierungsmittel (II) ein von (I) verschiedenes, aktive Methylengruppen enthaltendes Blockierungsmittel, ein Oxim oder eine Mischung aus diesen Blockierungsmitteln ist und

   - das Äquivalentverhältnis zwischen den mit (I) blockierten Isocyanatgruppen und den mit (II) blockierten Isocyanatgruppen zwichen 1,0 : 1,0 und 9,0 : 1,0 liegt.

2. Lacke nach Anspruch 1, dadurch gekennzeichnet, daß die Komponente (A) in einer Menge von 60 bis 75 Gew.%, die Komponente (B) in einer Menge von 10 bis 25 Gew.-%, die Komponente (C) in einer Menge von 10 bis 25 Gew.-% und die Komponente (D) in einer Menge von 5 bis 15 Gew.-% vorhanden ist.

3. Lacke nach Anspruch 1 oder 2, dadurch gekennzeichnet, daß die Komponente (A) eine Hydroxylzahl von 40 bis 240, vorzugsweise 90 bis 190 aufweist.

4. Lacke nach einem der Ansprüche 1 bis 3, dadurch gekennzeichnet, daß die in der Komponente (C) enthaltenen blockierten Isocyanatgruppen an aliphatische oder cycloaliphatische Reste gebunden sind.

5. Lacke nach einem der Ansprüche 1 bis 4, dadurch gekennzeichnet, daß die Komponente (C) aus blockiertem Hexamethylendiisocyanat, blockiertem Isophorondiisocyanat oder einer Mischung aus blockiertem Hexamethylendiisocyanat und blockiertem Isophorondiisocyanat besteht.

6. Lacke nach einem der Ansprüche 1 bis 5, dadurch gekennzeichnet, daß das Blockierungsmittel (I) Diethylmalonat ist.

7. Lacke nach einem der Ansprüche 1 bis 6, dadurch gekennzeichnet, daß das von (I) verschiedene, aktive Methylengruppen enthaltende Blockierungsmittel ein Acetessigsäurealkylester mit 1 bis 6 Kohlenstoffatomen im Alkylrest oder eine Mischung aus solchen Acetessigsäurealkylestern, vorzugsweise Acetessigsäureethylester ist.

8. Lacke nach einem der Ansprüche 1 bis 7, dadurch gekennzeichnet, daß das Blockierungsmittel (II) Methylethylketoxim ist.

9. Lacke nach einem der Ansprüche 1 bis 8, dadurch gekennzeichnet, daß das Äquivalentverhältnis zwischen den mit (I) blockierten und den mit (II) blockierten Isocyanatgruppen zwischen 8,0 : 2,0 und 6,0 : 4,0, vorzugsweise zwischen 7,5 : 2,5 und 6,5 : 3,5 liegt.

10. Verwendung der Lacke nach den Ansprüchen 1 bis 9 zur Herstellung von Decklackierungen auf Automobilkarosserien.

**Claims**

1. Nonaqueous paints comprising

   (A) a hydroxyl group-containing synthetic resin or a mixture of hydroxyl group-containing synthetic resins

   (B) an amino resin or a mixture of amino resins

   (C) a blocked polyisocyanate or a mixture of blocked polyisocyanates, and

   (D) a pigment or a mixture of pigments,

   characterized in that,
   component (A) is present in an amount of from 50 to 90% by weight, component (B) is present in an amount of from 5 to 45% by weight, component (C) is present in an amount of from 5 to 45% by weight and component (D) is present in an amount of from 1 to 25% by weight, the percentages by weight being based on (A) + (B) + (C) + (D) = 100% by weight, and in that component (C) contains both isocyanate groups blocked with a blocking agent (I) and isocyanate groups blocked with a blocking agent (II), in which context

   - the blocking agent (I) is a dialkyl malonate or a mixture of dialkyl malonates,

   - the blocking agent (II) is a blocking agent which is different from (I) and contains active methylene groups, or is an oxime, or is a mixture of these blocking agents, and

   - the ratio of equivalents between the isocyanate groups blocked with (I) and the isocyanate groups blocked with (II) is between 1.0:1.0 and 9.0:1.0.

2. Paints according to Claim 1, characterized in that component (A) is present in a quantity of from 60 to 75% by weight, component (B) is present in a quantity of from 10 to 25% by weight, component (C) is present in a quantity of from 10 to 25% by weight and component (D) is present in a quantity of from 5 to 15% by weight.

3. Paints according to Claim 1 or 2, characterized in that component (A) has a hydroxyl number of from 40 to 240, preferably from 90 to 190.

4. Paints according to one of Claims 1 to 3, characterized in that the blocked isocyanate groups present in component (C) are attached to aliphatic or cycloaliphatic radicals.

5. Paints according to one of Claims 1 to 4, characterized in that component (C) comprises blocked hexamethylene diisocyanate, blocked isophorone diisocyanate or a mixture of blocked hexamethylene diisocyanate and blocked isophorone diisocyanate.

6. Paints according to one of Claims 1 to 5, characterized in that the blocking agent (I) is diethyl malonate.

7. Paints according to one of Claims 1 to 6, characterized in that the blocking agent which is different from (I) and contains active methylene groups is an alkyl acetoacetate having 1 to 6 carbon atoms in the alkyl radical or a mixture of such alkyl acetoacetates, and is preferably ethyl acetoacetate.

8. Paints according to one of Claims 1 to 7, characterized in that the blocking agent (II) is methyl ethyl ketoxime.

9. Paints according to one of Claims 1 to 8, characterized in that the ratio of equivalents between the isocyanate groups blocked with (I) and the isocyanate groups blocked with (II) is between 8.0:2.0 and 6.0:4.0, preferably between 7.5:2.5 and 6.5:3.5.

10. Use of the paints according to Claims 1 to 9 for the preparation of topcoat finishes on motor vehicle bodies.

## Revendications

1. Peintures non aqueuses, contenant

   (A) une résine synthétique renfermant des groupes hydroxyle ou un mélange de résines synthétiques renfermant des groupes hydroxyle
   (B) une résine aminoplaste ou un mélange de résines aminoplastes
   (C) un polyisocyanate bloqué ou un mélange de polyisocyanates bloqués et
   (D) un pigment ou un mélange de pigments

   caractérisées en ce que
   le composant (A) est présent en une quantité allant de 50 à 90% en poids, le composant (B) est présent en une quantité allant de 5 à 45% en poids, le composant (C) est présent en une quantité allant de 5 à 45% en poids et le composant (D) est présent en une quantité allant de 1 à 25% en poids, ces pourcentages en poids étant basés sur (A) + (B) + (C) + (D) = 100% en poids et en ce que le composant (C) renferme des groupes isocyanate bloqués aussi bien par un agent bloquant (I) que par un agent bloquant (II), où

   - l'agent bloquant (I) est un malonate de dialkyle ou un mélange de malonates de dialkyle,
   - l'agent bloquant (II) est un agent bloquant, différent de (I), renfermant des groupes méthylène actifs, un oxime ou un mélange de ces agents bloquants et
   - le rapport d'équivalents entre les groupes isocyanate bloqués par (I) et les groupes isocyanate bloqués par (II) est compris entre 1,0:1,0 et 9,0:1,0.

2. Peintures selon la revendication 1, caractérisées en ce que le composant (A) est présent en une quantité allant de 60 à 75% en poids, le composant (B) est présent en une quantité allant de 10 à 25% en poids, le composant (C) est présent en une quantité allant de 10 à 25% en poids et le composant (D) est présent en une quantité allant de 5 à 15% en poids.

3. Peintures selon la revendication 1 ou 2, caractérisées en ce que le composant (A) présente un indice d'hydroxyle de 40 à 240, de préférence de 90 à 190.

4. Peintures selon l'une quelconque des revendications 1 à 3, caractérisées en ce que les groupes isocyanate bloqués contenus dans le composant (C) sont liés à des radicaux aliphatiques ou cycloaliphatiques.

5. Peintures selon l'une quelconque des revendications 1 à 4, caractérisées en ce que le composant (C) est composé de diisocyanate d'hexaméthylène bloqué, de diisocyanate d'isophorone bloqué ou d'un mélange de diisocyanate d'hexaméthylène bloqué et de diisocyanate d'isophorone bloqué.

6. Peintures selon l'une quelconque des revendications 1 à 5, caractérisées en ce que l'agent bloquant (I) est le malonate de diéthyle.

7. Peintures selon l'une quelconque des revendications 1 à 6, caractérisées en ce que l'agent bloquant, différent de (I) renfermant des groupes méthylène actifs, est un acétoacétate d'alkyle ayant de 1 à 6 atomes de carbone dans le radical alkyle ou un mélange de tels acétoacétates d'alkyle, de préférence l'acétoacétate d'éthyle.

8. Peintures selon l'une quelconque des revendications 1 à 7, caractérisées en ce que l'agent bloquant (II) est le méthyléthylcétoxime.

9. Peintures selon l'une quelconque des revendications 1 à 8, caractérisées en ce que le rapport d'équivalents entre les groupes isocyanate bloqués par (I) et les groupes isocyanate bloqués par (II) est compris entre 8,0:2,0 et 6,0:4,0, de préférence entre 7,5:2,5 et 6,5:3,5.

10. Utilisation des peintures selon les revendications 1 à 9, pour la préparation de revêtements de finition sur des carrosseries automobiles.